Europäisches Patentamt

European Patent Office

Office européen des brevets

(19)

(11) Veröffentlichungsnummer: **0 144 912**

**A2**

(12) # EUROPÄISCHE PATENTANMELDUNG

(21) Anmeldenummer: **84114438.9**

(22) Anmeldetag: **29.11.84**

(51) Int. Cl.⁴: **B 23 Q 3/157**

(30) Priorität: **06.12.83 DE 3344084**

(43) Veröffentlichungstag der Anmeldung:
**19.06.85 Patentblatt 85/25**

(84) Benannte Vertragsstaaten:
**CH FR IT LI**

(71) Anmelder: **MAHO WERKZEUGMASCHINENBAU BABEL
& CO.
Postfach 1280
D-8962 Pfronten(DE)**

(72) Erfinder: **Schmitt, Edgar
Turmstrasse 10/2
D-7140 Ludwigsburg(DE)**

(74) Vertreter: **Patentanwälte Beetz sen. - Beetz jun. Timpe -
Siegfried - Schmitt-Fumian
Steinsdorfstrasse 10
D-8000 München 22(DE)**

(54) **Werkzeugwechsler für Fräs- und Bohrmaschinen.**

(57) Werkzeugwechsler für Fräs- und Bohrmaschinen mit
Horizontal- (1) und Vertikalspindel (2), bestehend aus einem
Werkzeugmagazin (3) und einer beweglichen Transportvorrichtung (4) mit einem Greiferkopf (5) für den Werkzeugtransport zwischen der jeweiligen Spindel (1 bzw. 2) und dem
Magazin (3). Bei der Erfindung ist die Transportvorrichtung
(4) mit dem Greiferkopf (5) horizontal und quer zur Längsachse (A) des Spindelstockes (10) zwischen dem Magazin (3) und
einer Position in der jeweiligen Spindelachse (A, B) bewegbar, und der Greiferkopf (5) ist um eine Längsachse verdrehbar.

F i g.2

EP 0 144 912 A2

Croydon Printing Company Ltd.

MAHO Werkzeugmaschinenbau Babel & Co.
D-8962 Pfronten/Allgäu
- - - - - - - - - - - - - - - - - - - - - - - - - - - - - - - -

Werkzeugwechsler für Fräs- und Bohrmaschinen

Die Erfindung betrifft einen Werkzeugwechsler für Fräs- und Bohrmaschinen mit Horizontal- und Vertikalspindel, bestehend aus einem Werkzeugmagazin und einer beweglichen Transportvorrichtung mit einem Greiferkopf und einem daran befestigten Greifer für den Werkzeugtransport zwischen der jeweiligen Spindel und dem Magazin sowie zum selbsttätigen Herausnehmen und Einsetzen von Werkzeugen in die Spindel bzw. das Magazin.

Bei einer Reihe von sog. Universal-Fräs- und Bohrmaschinen kann die Einsatzmöglichkeit dadurch erweitert werden, daß an die Stirnfläche des Spindelstocks neben, oberhalb oder vor der horizontalen Hauptspindel ein weiterer Fräskopf montiert wird, der eine vom Hauptantrieb über entsprechende Getriebeelemente bzw. von der Welle der Horizontalspindel angetriebene Vertikalspindel ent-

112-(x2219)-Sd-E

hält. In der Regel müssen derartige Vertikal-Fräsköpfe von Hand an die Stirnseite des Spindelstockes angeschraubt werden, was allerdings einem vollautomatisch gesteuerten Ablauf von horizontalen und vertikalen Bohr- bzw. Fräsarbeiten entgegensteht. Von der Anmelderin wurde bereits eine Universal-Fräs- und Bohrmaschine entwickelt, bei welcher der Vertikal-Fräskopf auf einer am vorderen Ende des Spindelstockes oberhalb der Horizontalspindel vorgesehenen 45°-Ebene um seine schräge Mittelachse verdrehbar montiert ist. Da die Verdrehungen des Vertikal-Fräskopfes in und aus seiner Betriebsstellung motorisch erfolgen und die horizontale Hauptspindel sofort nach dem Verdrehen des Vertikalkopfes in die Ruheposition der Vertikalspindel betriebsbereit ist, können diese Vorgänge in die NC-Steuerung integriert werden. Dies eröffnet die Möglichkeiten, aufeinanderfolgende Bearbeitungsgänge mit der Horizontalspindel bzw. mit der Vertikalspindel auszuführen, ohne daß irgendwelche Eingriffe von Hand erforderlich sind.

Für Universal-Werkzeugmaschinen mit Horizontal- und Vertikalspindel ist es zur Zeit noch nicht möglich, wahlweise aus der Horizontalspindel und der Vertikalspindel unter Verwendung nur eines Werkzeug-Magazins automatisch zu wechseln. In der Praxis existieren daher auch für solche Maschinentypen automatische Werkzeugwechsler für die Werkzeuge der häufiger benutzten horizontalen Hauptspindel. Bei dem selteneren Einsatz der Vertikalspindel müssen deren Werkzeuge jeweils von Hand gewechselt werden, was naturgemäß mit einem Zeit- und Arbeitsaufwand verbunden ist und den automatischen Bearbeitungsablauf komplizierterer Werkstücke behindert.

Aufgabe der Erfindung ist es, einen Werkzeugwechsler für Fräs- und Bohrmaschinen zu schaffen, der den automatischen Werkzeugwechsel zwischen einem einzigen Werkzeugmagazin und wahlweise der horizontalen Hauptspindel bzw. der Vertikalspindel vornehmen kann.

Diese Aufgabe wird erfindungsgemäß dadurch gelöst, daß die Transportvorrichtung zusammen mit dem Greiferkopf horizontal und zur Längsachse des Spindelstockes zwischen dem Magazin und einer Position in der jeweiligen Spindelachse bewegbar ist, und daß der Greiferkopf um eine Längsachse verdrehbar ist.

Die horizontale Bewegung der Transportvorrichtung kann in Form einer geradlinigen Vorschub- oder einer Schwenkbewegung derart gewählt werden, daß die Mittelachse des Greifers und damit des aufzunehmenden Werkzeuges beim Werkzeugwechsel entweder mit der Mittelachse der Horizontalspindel oder der Vertikalspindel zusammenfällt. Durch eine Verdrehung des Greiferkopfes um 90° kann der Greifer wahlweise ein Werkzeug entweder in die Horizontalspindel oder in die Vertikalspindel einsetzen.

Gemäß einer zweckmäßigen Ausgestaltung der Erfindung kann die Transportvorrichtung zusammen mit dem Tellermagazin eine von der Fräsmaschine gesonderte Baueinheit darstellen, was insofern vorteilhaft ist, weil der den eigentlichen Werkzeugtransport durchführende Arm als einfacher Schieber ausgebildet sein kann, der zwischen der Entnahmestelle des Tellermagazins und der jeweiligen Übergabeposition in der Mittelachse der vertikalen oder horizontalen Arbeitsspindel geradlinige Bewegungen ausführt. Um auf einfache Weise die Bewegungsfreiheit zu erhalten, ist der Arm zweckmäßig oberhalb des horizontalen Tellermagazins angeordnet und ggf. zusammen mit dem Tellermagazin in der Höhe verstellbar, damit die jeweilige Übergabeposition entweder an die Vertikalspindel oder an die Horizontalspindel auf einfache Weise erreicht werden kann, wenn ein vertikaler Abstand zwischen der Maulöffnung der Vertikalspindel und der Mittelachse der Horizontalspindel vorhanden ist.

Weitere zweckmäßige Ausgestaltungen der Erfindung sind Gegenstand weiterer Unteransprüche.

Im folgenden wird ein Ausführungsbeispiel der Erfindung anhand der Zeichnung im einzelnen beschrieben. Es zeigen:

Fig. 1      eine schematische Seitenansicht des Werkzeugwechslers bei der Werkzeug-übergabe an die Vertikalspindel;

Fig. 2      eine schematische Draufsicht auf den Werkzeugwechsler gemäß Fig. 1 mit schematisch eingezeichneter Vertikal-und Horizontalspindel;

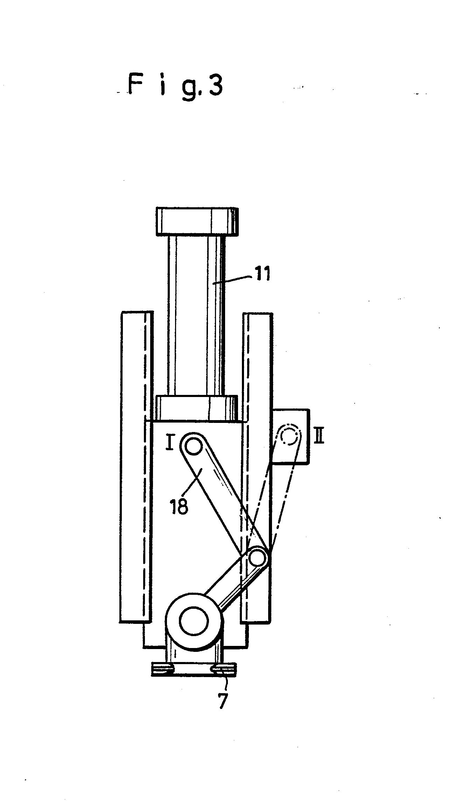

Fig. 3      eine schematische Darstellung des Greiferkopfes mit dem um 90° schwenkbaren Greifer.

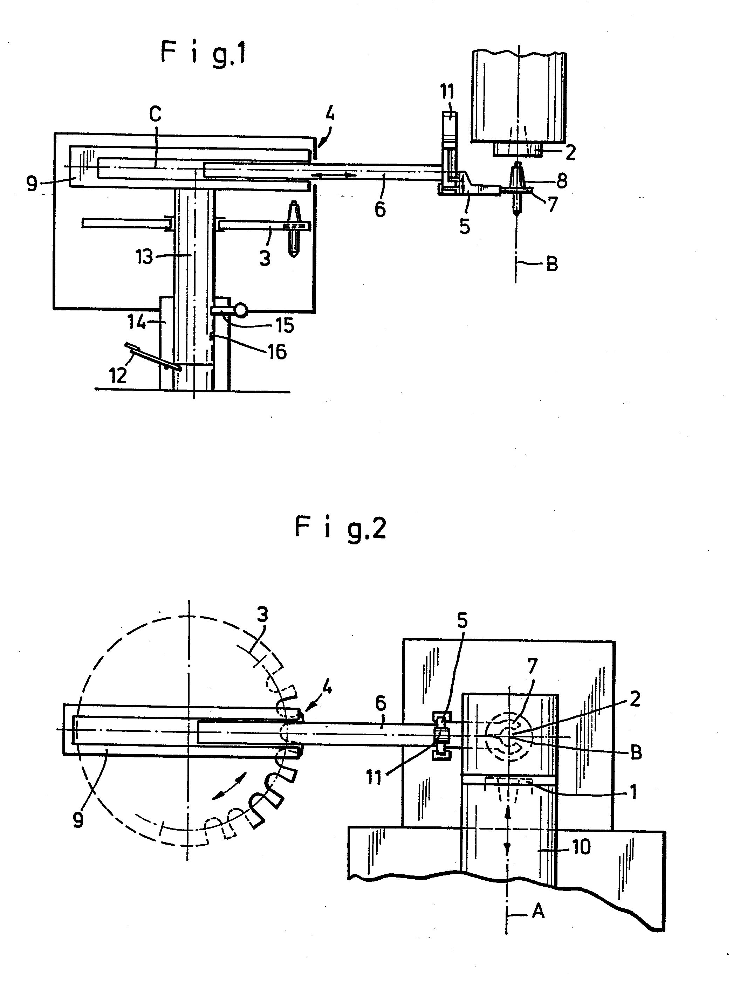

Wie in den Fig. 1 und 2 dargestellt, ist in einem horizontal in Richtung des Doppelpfeiles verschiebbaren Spindelstock 10 einer Universal-Fräs- und Bohrmaschine eine horizontale Hauptspindel 1 gelagert, die durch einen - nicht dargestellten - Hauptantrieb in Drehbewegung versetzt wird und in einem vorgegebenen Maß Vorschubbewe-

.gungen ausführen kann. An der vorderen Stirnfläche des Spindelstocks 10 ist ein Vertikalkopf mit einer darin drehbar um eine Achse B gelagerten Vertikalspindel 2 montiert. Bei Bedarf kann dieser Vertikal-Fräskopf abgebaut oder aber selbsttätig in eine Ruhelage bewegt werden, so daß anschließend mit der Horizontalspindel 1 weitergearbeitet werden kann, ohne daß das - nicht dargestellte - Werkstück neu eingespannt werden müßte.

Wie ersichtlich, besteht der Werkzeugwechsler aus einem horizontalen Tellermagazin 3, welches mittels eines nicht dargestellten Antriebsmotors schrittweise um seine Hochachse in der einen oder anderen Richtung verdreht werden kann. Dieses Tellermagazin 3 ist an einer Säule 13 einer Transportvorrichtung 4 drehbar abgestützt. Diese Transportvorrichtung 4 enthält ein am oberen Ende der Säule 13 montiertes Gehäuse 9, in dem ein Arm 6 in Form eines Schiebers aufgenommen und z. B. durch einen nicht dargestellten Druckmittelzylinder in Richtung der Mittelachse C verschiebbar ausgebildet ist. Dieser Arm 6 trägt an seinem freien Ende einen Greiferkopf 5 mit einem Zangen-Greifer 7, welcher die entsprechend ausgebildeten Werkzeughalter 8 erfassen kann (vgl. Fig. 1). Wie aus Fig. 1 ersichtlich, ist die Säule 13 in einer hohlzylindrischen Halterung 14 längsverschiebbar geführt und kann durch einen Fußhebel 12 in der Höhe verstellt werden. Ein Riegel 15 greift in Kerben 16 in der Säule 13 ein und legt damit die obere bzw. untere Stellung fest. Das am oberen Ende der Säule befestigte Gehäuse wird bei dieser Auf- und Abbewegung ebenso wie das Tellermagazin 3 mitgenommen.

Der beschriebene Werkzeugwechsler arbeitet wie folgt:

Zum Wechsel eines Werkzeuges aus der Vertikalspindel 2 wird durch Betätigen des Fußpedals 12 die Säule 13 zusammen mit dem Gehäuse 9 und dem Schieberarm 6 in die geeignete Höhenlage gebracht. Anschließend fährt der Schieberarm 6 in die in den Fig. 1 und 2 dargestellte Stellung aus. Der Stellzylinder 11 am Greiferkopf wird betätigt und bringt den Greifer 7 in eine Position, in welcher der noch in der Spindel eingespannte Werkzeughalter 8 erfaßt werden kann. Nach erneuter Betätigung des Stellzylinders 11 wird der Werkzeughalter aus der Spindel in die in Fig. 1 dargestellte Lage herausgezogen. Anschließend fährt der Schieberarm 6 in seine eingezogene Stellung zurück und legt das Werkzeug in die dafür vorgesehene Werkzeugaufnahme im Tellermagazin 3 ab. Daraufhin dreht das Tellermagazin, um ein neues Werkzeug in die in der Bewegungsbahn des Armes liegende Stellung zu bringen. Durch erneute Betätigung des Greiferarms 6 und des am Greiferkopf 5 vorgesehenen Greifmechanismus wird dieses neue Werkzeug vom Greifer 7 erfaßt und durch Ausfahren des Schieberarms 6 in die in Fig. 1 dargestellte Position gebracht. Die erneute Betätigung des Stellzylinders 11 bewirkt das Einschieben des Werkzeughalters in die vertikale Spindel 2.

Soll ein Werkzeug der Horizontalspindel gewechselt werden, vollziehen sich die Bewegungsvorgänge in ähnlicher Weise. Es ist lediglich notwendig, die Säule zusammen mit dem Gehäuse 9 und dem Schieberarm 6 in die geeignete Höhenlage zu bringen, was durch Betätigen des Pedals 12 - oder eines anderen geeigneten Antriebsmittels, z. B. eines Stellzylinders - und durch Einschieben des Riegels 15 in die entsprechende Kerbe 16 erfolgt. Das Einsetzen und die Entnahme des jeweiligen Werkzeuges mit seinem Halter vollzieht sich in der oben beschriebenen Weise. Unterschiedlich ist das Herausnehmen bzw. das Einsetzen des Werkzeughalters in die Horizontalspindel. Zu diesem Zweck wird eine Drehmechanik betätigt und der Greifer um 90° verdreht, so daß seine Mittelachse mit der Mittelachse der Horizontalspindel fluchtet. In diesem Zustand kann entweder die Horizontalspindel um eine entsprechende Strecke ausgefahren werden, damit der Werkzeughalter in die Spindel eingesetzt wird, oder durch Betätigen des Stellzylinders kann der Greifer diese Einsetzbewegung ausführen. Entsprechend gleiche Bewegungen in umgekehrter Richtung sind für das Abziehen eines gebrauchten Werkzeuges aus der Horizontalspindel 1 notwendig.

0144912

Ansprüche
------------------

1. Werkzeugwechsler für Fräs- und Bohrmaschinen mit Horizontal- (1) und Vertikalspindel (2), bestehend aus einem Werkzeugmagazin (3) und einer beweglichen Transportvorrichtung
(4) mit einem Greiferkopf (5) für den Werkzeugtransport
zwischen der jeweiligen Spindel (1 bzw. 2) und dem Magazin
(3),

d a d u r c h   g e k e n n z e i c h n e t ,

daß die Transportvorrichtung (4) mit dem Greiferkopf (5)
horizontal und quer zur Längsachse (A) des Spindelstockes
(10) zwischen dem Magazin (3) und einer Position in der jeweiligen Spindelachse (A, B) bewegbar ist, und daß der Greiferkopf (5) um eine Längsachse verdrehbar ist.

2. Werkzeugwechsler nach Anspruch 1,
dadurch gekennzeichnet,
daß die Transportvorrichtung (4) zusammen mit dem Tellermagazin (3) eine von der Fräsmaschine gesonderte Baueinheit bilden.

3. Werkzeugwechsler nach Anspruch 1 oder 2,
dadurch gekennzeichnet, daß der Arm (6) der Transportvorrichtung (4) senkrecht zur vertikalen Mittelebene des Spindelstocks (10) längsverschiebbar ist.

4. Werkzeugwechsler nach einem der Ansprüche 1 bis 3, dadurch gekennzeichnet, daß der Arm (6) oberhalb des horizontalen Tellermagazins (3) angeordnet ist.

5. Werkzeugwechsler nach einem der Ansprüche 1 bis 4, dadurch gekennzeichnet, daß der Arm (6) in der Höhe verstellbar ist und an seinem Ende den Greiferkopf (5) mittels eines Drehgelenks trägt.

6. Werkzeugwechsler nach einem der Ansprüche 1 bis 5, dadurch gekennzeichnet, daß der Greifer (7) höhenverstellbar am Greiferkopf (5) angeordnet ist.

7. Werkzeugwechsler nach einem der Ansprüche 1 bis 6, dadurch gekennzeichnet, daß der Arm (6) zusammen mit dem tellerförmigen Magazin (3) in einem gemeinsamen Gehäuse (9) in der Höhe zwischen zwei Stellungen verstellbar angeordnet ist, und daß der Arm (6) und der Greiferkopf (5) durch Stellzylinder (11) bewegbar sind.

8. Werkzeugwechsler nach einem der Ansprüche 1 bis 7, dadurch gekennzeichnet, daß die Höhenverstellung des als Schieber ausgebildeten Arms (6) und des Tellermagazins (3) mittels eines Fußhebels (12) erfolgt.

0144912

- 3 -

9. Werkzeugwechsler nach einem der Ansprüche 1 bis 8,
dadurch gekennzeichnet,
daß der Greifer (7) mittels einer in zwei Stellungen (I/II)
verstellbaren Kulissenführung (18) und eines Stellantriebes
(11) gegenüber dem Greiferkopf (5) bewegbar montiert ist.

10. Werkzeugwechsler nach einem der Ansprüche 1 bis 9,
dadurch gekennzeichnet,
daß der in Längsrichtung in einem Gehäuse verschiebbare
Arm (6) um seine Längsachse (C) verdrehbar ist, um ein
im Greifer (7) eingespanntes Werkzeug wahlweise in Flucht
zu der Vertikal- bzw. der Horizontal-Spindel (1 bzw. 2) zu
bringen.

Fig.1

Fig.2

Fig.3